# EUROPÄISCHE PATENTANMELDUNG

(11) **EP 3 922 385 A1**
(43) Veröffentlichungstag der Anmeldung: **15.12.2021**
(21) Anmeldenummer: 20179134.0
(22) Anmeldetag: 10.06.2020
(51) Int. Cl.: B23D 57/00, B23D 59/00, B23D 59/04, B28D 5/00, B28D 5/04

(54) **VERFAHREN ZUM ABTRENNEN EINER VIELZAHL VON SCHEIBEN VON WERKSTÜCKEN MITTELS EINER DRAHTSÄGE WÄHREND EINER ABFOLGE VON ABTRENNVORGÄNGEN**

(71) Anmelder: Siltronic AG, 81677 München (DE)
(72) Erfinder: Beyer, Axel, 84489 Burghausen (DE); Frintert, Carl, 84453 Mühldorf am Inn (DE); Wiesner, Peter, 84367 Reut (DE)
(74) Vertreter: Staudacher, Wolfgang

(57) **Zusammenfassung**

Verfahren zum Abtrennen einer Vielzahl von Scheiben mittels einer Drahtsäge von Werkstücken (4) während einer Abfolge von Abtrennvorgängen, die in Initialschnitte und Folgeschnitte untergliedert sind, wobei die Drahtsäge ein Drahtgatter (2) aus sich bewegenden Drahtabschnitten eines Sägedrahts (3) und eine Stellvorrichtung (12) umfasst, und das Drahtgatter (2) in einer Ebene zwischen zwei Drahtführungsrollen (1) gespannt ist, wobei jede der zwei Drahtführungsrollen (1) zwischen einem Festlager (5) und einem Loslager (6) gelagert ist. Das Verfahren umfasst während eines jeden der Abtrennvorgänge das Zustellen des jeweiligen Werkstücks (4) mittels der Stellvorrichtung (12) durch das Drahtgatter (2) entlang einer Zustellrichtung senkrecht zu einer Werkstückachse und senkrecht zur Ebene des Drahtgatters (2) in Gegenwart einer Arbeitsflüssigkeit und von Hartstoffen, die abrasiv auf das Werkstück (4) einwirken, gekennzeichnet durch
während eines jeden der Abtrennvorgänge das Zustellen des Werkstücks (4) durch das Drahtgatter (2) unter gleichzeitigem axialen Verschieben der Loslager (6) durch Temperieren der Festlager (5) mit einer Kühlflüssigkeit gemäß der Vorgabe eines Temperaturprofils, das die Temperatur der Kühlflüssigkeit in Abhängigkeit einer Schnitttiefe vorgibt und mit einem ersten Korrekturprofil korreliert, welches den Verschiebeweg der Loslager (6) in Abhängigkeit der Schnitttiefe vorgibt; und
das Zustellen des Werkstücks (4) durch das Drahtgatter (2) unter gleichzeitigem Verschieben des Werkstücks (4) entlang der Werkstückachse mittels eines Stellelements (15) gemäß der Vorgabe eines zweiten Korrekturprofils, welches den Verschiebeweg des Werkstücks (4) vorgibt, wobei das erste und zweite Korrekturprofil einer Formabweichung entgegengerichtet sind; und
das Ermitteln der Formabweichung während eines jeden der Abtrennvorgänge und/oder vor jedem der Abtrennvorgänge.

## Beschreibung

Gegenstand der Erfindung ist ein Verfahren zum Abtrennen einer Vielzahl von Scheiben von Werkstücken mittels einer Drahtsäge während einer Abfolge von Abtrennvorgängen, wobei die Drahtsäge ein Drahtgatter aus sich bewegenden Drahtabschnitten eines Sägedrahts und eine Stellvorrichtung umfasst, und das Drahtgatter in einer Ebene zwischen zwei Drahtführungsrollen gespannt ist, und wobei jede der zwei Drahtführungsrollen zwischen einem Festlager und einem Loslager gelagert ist. Während eines jeden der Abtrennvorgänge erfolgt das Zustellen des jeweiligen Werkstücks mittels der Stellvorrichtung durch das Drahtgatter entlang einer Zustellrichtung senkrecht zu einer Werkstückachse und senkrecht zur Ebene des Drahtgatters in Gegenwart einer Arbeitsflüssigkeit und von Hartstoffen, die abrasiv auf das Werkstück einwirken.

### Stand der Technik / Probleme

Ein solches Verfahren zum Abtrennen einer Vielzahl von Scheiben kann mittels Trennläppen (lap slicing) oder Trennschleifen (grind slicing) erfolgen.
Beim Trennläppen wird dem zwischen Drahtoberfläche und Werkstück gebildeten Arbeitsraum Arbeitsflüssigkeit in Form einer Aufschlämmung (slurry) aus Hartstoffen in einem flüssigen Trägermedium zugeführt. Der Materialabtrag erfolgt beim Trennläppen mittels einer Dreikörper-Wechselwirkung aus Werkzeugträger (Sägedraht), Werkzeug (Abrasiv) und Werkstück.
Beim Trennschleifen wird Sägedraht verwendet, in dessen Oberfläche Hartstoffe fest eingebunden sind, und es wird eine Arbeitsflüssigkeit zugeführt, die selbst keine abrasiv wirkenden Stoffe enthält und als Kühlschmiermittel wirkt. Der Materialabtrag erfolgt beim Trennschleifen mittels Zweikörper-Wechselwirkung aus einem diamantbelegten Sägedraht als Werkzeug und dem Werkstück.

Bei üblichen Drahtsägen ist jede der Drahtführungsrollen jeweils in der Nähe einer ihrer Stirnflächen mit einem Lager versehen, das fest mit dem Maschinenrahmen verbunden ist und als Festlager bezeichnet wird, und in der Nähe der gegenüberliegenden Stirnfläche mit einem Lager, das in Achsrichtung der Drahtführungsrolle relativ zum Maschinenrahmen beweglich ist und als Loslager bezeichnet wird.

Es sind Maßnahmen bekannt, die darauf abzielen, der Veränderung der Anordnung von Drahtgatter und Werkstück relativ zueinander während des Abtrennvorgangs entgegenzuwirken, um die Planparallelität der Hauptflächen der abzutrennenden Scheiben zu verbessern.

Aus der US 5 377 568 ist ein Verfahren bekannt, bei dem die Position einer außen an der Drahtführungsrolle befindlichen Bezugsfläche relativ zum Maschinenrahmen gemessen wird und mittels Temperierung des Drahtführungsrollen-Innenraums eine thermische Längenzunahme oder Längenabnahme der Drahtführungsrolle bewirkt wird, bis die gemessen Positionsänderung der Bezugsfläche wieder ausgeglichen ist.

Aus WO 2013/079683 A1 ist ein Verfahren bekannt, bei dem zunächst die sich für verschiedene Temperaturen der Drahtführungsrollenlager ergebenden Formen von Scheiben gemessen und jede dieser Formen mit der jeweils zugehörigen Lagertemperatur gespeichert wird und dann im Folgeschnitt die Lagertemperatur ausgewählt wird, die am besten zur gewünschten Zielform passt.

Aus US 5 875 770 ist ein Verfahren bekannt, bei dem die Form von Scheiben eines Schnitts gemessen wird, durch Differenzbildung zu einer gewünschten Idealform der Scheiben eine schnitttiefen-abhängige Korrekturkurve berechnet wird und im folgenden Schnitt das Werkstück während des Trennvorgangs nach Maßgabe dieser Korrekturkurve in Achsrichtung relativ zum Drahtgatter verschoben wird.

Trotz dieser Maßnahmen besteht weiterhin Bedarf an Verbesserungen, zum einen, weil diese Maßnahmen nur begrenzt wirken und zum anderen, weil die Anforderungen bezüglich Ebenheit und Planparallelität von Scheiben, insbesondere im Bereich der Halbleiterindustrie, immer anspruchsvoller werden.

Die Aufgabe der vorliegenden Erfindung besteht darin, Scheiben zugänglich zu machen, deren Form einer Zielform möglichst nahekommt.

Die Aufgabe der Erfindung wird gelöst durch ein Verfahren zum Abtrennen einer Vielzahl von Scheiben mittels einer Drahtsäge von Werkstücken während einer Abfolge von Abtrennvorgängen, die in Initialschnitte und Folgeschnitte untergliedert sind, wobei die Drahtsäge ein Drahtgatter aus sich bewegenden Drahtabschnitten eines Sägedrahts und eine Stellvorrichtung umfasst, und das Drahtgatter in einer Ebene zwischen zwei Drahtführungsrollen gespannt ist, wobei jede der zwei Drahtführungsrollen zwischen einem Festlager und einem Loslager gelagert ist, das Verfahren umfassend
während eines jeden der Abtrennvorgänge das Zustellen des jeweiligen Werkstücks mittels der Stellvorrichtung durch das Drahtgatter entlang einer Zustellrichtung senkrecht zu einer Werkstückachse und senkrecht zur Ebene des Drahtgatters in Gegenwart einer Arbeitsflüssigkeit und von Hartstoffen, die abrasiv auf das Werkstück einwirken, gekennzeichnet durch
während eines jeden der Abtrennvorgänge das Zustellen des Werkstücks durch das Drahtgatter unter gleichzeitigem axialen Verschieben der Loslager durch Temperieren der Festlager mit einer Kühlflüssigkeit gemäß der Vorgabe eines Temperaturprofils, das die Temperatur der Kühlflüssigkeit in Abhängigkeit einer Schnitttiefe vorgibt und mit einem ersten Korrekturprofil korreliert, welches den Verschiebeweg der Loslager in Abhängigkeit der Schnitttiefe vorgibt; und
das Zustellen des Werkstücks durch das Drahtgatter unter gleichzeitigem Verschieben des Werkstücks entlang der Werkstückachse mittels eines Stellelements gemäß der Vorgabe eines zweiten Korrekturprofils, welches den Verschiebeweg des Werkstücks vorgibt, wobei das erste und zweite Korrekturprofil einer Formabweichung entgegengerichtet sind; und
das Ermitteln der Formabweichung während eines jeden der Abtrennvorgänge und/oder vor jedem der Abtrennvorgänge.

Das Verfahren kann als Trennläppen oder Trennschleifen ausgestaltet sein. Schnitttiefe (depth of cut, doc) bezeichnet eine Länge entgegengesetzt zur Zustellrichtung im Bereich vom Einschnitt in das Werkstück bis zum Ausschnitt aus dem Werkstück.

Das Temperieren der Festlager (nachfolgend als wire guide temperature control, WGTC bezeichnet) führt zu einer Kontraktion oder Ausdehnung der Festlager und damit von deren Komponenten in Achsrichtung der Drahtführungsrollen, was ein axiales Verschieben der Loslager und so ein Verschieben der Drahtführungsrollen relativ zum Werkstück zur Folge hat. Das Temperieren der Festlager hat also qualitativ denselben Effekt wie das Verschieben des Werkstücks (nachfolgend als ingot positioning control, IPC bezeichnet) entlang der Werkstückachse mittels eines Stellelements. Das Stellelement ist vorzugsweise ein Piezo-Aktuator. Die Größen, die den jeweiligen Verschiebeweg bewirken, sind also die Temperatur der Kühlflüssigkeit im Fall von WGTC und im Fall von IPC das Signal, mit dem das Stellelement angesteuert wird.

Erfindungsgemäß sind beide Maßnahmen vorgesehen, um eine mögliche Formabweichung zu minimieren. Mit dieser Vorgehensweise sind besondere Vorteile verknüpft. Werden die Maßnahmen kombiniert eingesetzt, kann eine Amplitude (Betrag des Verschiebewegs) des Verschiebens der Drahtführungsrollen relativ zum Werkstück erreicht werden, die größer ist, als die Amplitude, die beim Anwenden von nur einer der Maßnahmen möglich ist. Der Bereich, innerhalb dessen der Verschiebeweg der Loslager und des Werkstücks linear abhängig von der die Verschiebung bewirkenden Größe ist, ist weiter, als der entsprechende Bereich, der beim Anwenden von nur einer der Maßnahmen zur Verfügung steht. Vom Ändern der Größe, die die Verschiebung bewirkt, bis zum tatsächlichen Eintritt der Verschiebung vergeht im Fall von WGTC vergleichsweise deutlich mehr Reaktionszeit, als im Fall von IPC, insbesondere, wenn das Stellelement ein Piezo-Aktuator ist. Die beiden Maßnahmen haben also unterschiedliche Regelbandbreiten. Dementsprechend ist es von Vorteil, vergleichsweise hochfrequenten Formabweichungen, also Formabweichungen, die sich schnitttiefenabhängig mit vergleichsweise großem Gradienten ändern, mittels IPC zu begegnen und vergleichsweise niederfrequenten Formabweichungen mittels WGTC. Wegen der unterschiedlichen Reaktionszeiten kann eine Regelung mittels IPC eingesetzt werden, um ein Überschwingen der Regelung mittels WGTC zu dämpfen. Darüber hinaus ist die Regelbandbreite der Kombination von IPC und WGTC größer, als die von IPC oder von WGTC. Die Kombination beider Maßnahmen erlaubt es, dass ein größerer Verschiebeweg je Zeiteinheit bewirkt werden kann, weil das Verschieben der Loslager und des Werkstücks von zwei unabhängigen Stellgliedern ausgeführt wird.

Sofern die Formabweichung vor einem Abtrennvorgang bestimmt wird, bezeichnet der Begriff Formabweichung die Abweichung eines Formprofils einer Scheibe beziehungsweise eines Durchschnittsformprofils von Scheiben von einem Referenzformprofil.

Sofern die Formabweichung während eines Abtrennvorgangs bestimmt wird, bezeichnet der Begriff Formabweichung die Abweichung der Lage einer Linie durch die Mitte eines beobachteten Schnittspalts beziehungsweise die Abweichung der Lage einer, mehrere solcher Linien repräsentierenden Durchschnittslinie von der Lage einer Referenztrajektorie. Diese Linie und die Referenztrajektorie hätten dieselbe Lage bezüglich einer gemeinsamen Referenz, verliefe der Abtrennvorgang vollkommen störungsfrei, also ohne unbeabsichtigtes axiales Verschieben der Drahtführungsrollen und/oder axiales Verschieben des Werkstücks. Die gemeinsame Referenz ist ein unbewegt bleibender Ort im Raum, beispielsweise ein Ort auf dem Maschinenrahmen. Werden mehrere Schnittspalte beobachtet, werden die Lagen der Linien durch die Mitten der Schnittspalte zur Lage einer Durchschnittslinie gemittelt. Punkte auf gleicher Höhe der Linie beziehungsweise der Durchschnittslinie und der Referenztrajektorie repräsentieren eine bestimmte Schnitttiefe. Dementsprechend bezeichnet der Abstand eines solchen Punkts auf der Linie beziehungsweise auf der Durchschnittslinie zum entsprechenden Punkt auf der Referenztrajektorie die Formabweichung bei der von den Punkten repräsentierten Schnitttiefe.

Das Beobachten eines oder mehrerer von Schnittspalten erfolgt vorzugsweise mittels Bestrahlung mit optischer Strahlung, IR-Strahlung, Röntgenstrahlung oder y-Strahlung. Darüber hinaus kommt auch eine mechanische Abtastung der Schnittspalte oder eine induktive oder kapazitive Messung der Schnittspalte in Betracht.

Die Formabweichung wird während eines jeden der Abtrennvorgänge und/oder vor jedem der Abtrennvorgänge ermittelt.

Gemäß einer Ausführungsform basiert das Ermitteln der Formabweichung auf dem Beobachten eines oder mehrerer Schnittspalte, und es werden zwei geschlossene Regelkreise eingerichtet. Der erste Regelkreis reagiert auf eine Regelabweichung, also auf eine ermittelte Formabweichung, mittels WGTC und der zweite Regelkreis mittels IPC, wobei die zu leistende Verschiebung der Loslager und des Werkstücks zum Zurückführen der Formabweichung arbeitsteilig ausgeführt wird. Die Loslager werden mittels WGTC entsprechend eines ersten Korrekturprofils verschoben, das den Verschiebeweg der Loslager in Abhängigkeit der Schnitttiefe bestimmt. Das Temperaturprofil, das die Temperatur der Kühlflüssigkeit in Abhängigkeit einer Schnitttiefe vorgibt, korreliert mit dem ersten Korrekturprofil. Vorab wird experimentell ermittelt, welche Temperaturänderung der Kühlflüssigkeit erforderlich ist, um den vorgegebenen Verschiebeweg des Loslagers der jeweiligen Drahtführungsrolle zu bewirken. Das erste Korrekturprofil bestimmt in Abhängigkeit der Schnitttiefe den Anteil an Verschiebeweg, den die Loslager ausführen, um die Formabweichung abzubauen. Das Werkstück wird mittels IPC entsprechend eines zweiten Korrekturprofils verschoben. Das zweite Korrekturprofil bestimmt in Abhängigkeit der Schnitttiefe den Anteil an Verschiebeweg, den das Werkstück ausführt, um die Formabweichung abzubauen. Die Summe beider Anteile entsprechen dem Verschiebeweg, der nötig ist, um die ermittelte Formabweichung abzubauen. Die Anteile an Verschiebeweg können gleich oder unterschiedlich aufgeteilt sein.

Gemäß einer anderen Ausführungsform basiert das Ermitteln der Formabweichung auf einem Vergleich eines Durchschnittsformprofils bereits abgetrennter Scheiben mit einem Referenzformprofil, liefert der Vergleich ein Gesamtkorrekturprofil, das vor einem Abtrennvorgang schon festlegt, welcher Verschiebeweg in Abhängigkeit der Schnitttiefe notwendig ist, um die Formabweichung zu vermeiden, die in Anbetracht des Vergleichs ohne Gegenmaßnahmen zu erwarten wäre. Das Gesamtkorrekturprofil wird in das erste und zweite Korrekturprofil aufgeteilt und damit festgelegt, welche Anteile an Verschiebeweg mittels WGTC und IPC zu leisten sind. Auch in diesem Fall können die Anteile an Verschiebeweg gleich oder in einem anderen Größenverhältnis aufgeteilt sein.

Gemäß einer weiteren Ausführungsform basiert das Ermitteln der Formabweichung auf dem Beobachten eines oder mehrerer Schnittspalte und auf einem Vergleich eines Durchschnittsformprofils bereits abgetrennter Scheiben mit einem Referenzformprofil. Der Formabweichung, die durch das Beobachten eines oder mehrerer Schnittspalte ermittelt wird, wird das erste oder alternativ das zweite Korrekturprofil zugeordnet und der Formabweichung, die durch Vergleichen des Durchschnittsformprofils mit dem Referenzformprofil ermittelt wird, wird das zweite oder alternativ das erste Korrekturprofil zugeordnet, Falls also WGTC gegen eine Formabweichung eingesetzt wird, deren Ermittlung während eines jeden der Abttrennvorgänge erfolgt, wird IPC gegen eine Formabweichung eingesetzt, die vor jedem der Abtrennvorgänge ermittelt wird, oder umgekehrt.

Die Oberfläche einer Scheibe setzt sich zusammen aus den Hauptflächen und der Randfläche. Die Hauptflächen umfassen Vorderseite und Rückseite der Scheibe. Eine Scheibe kann vermessen werden, indem sie zwischen einem Paar Sensoren angeordnet wird, wie es bei einer warp-Messung üblich ist. Jeder der Sensoren misst den Abstand, der ihm zugewandten Hauptfläche der Scheibe an Messpunkten. Die Messpunkte können über die Hauptflächen verteilt sein oder entlang eines Durchmessers der Scheibe liegen, der nicht mehr als ± 20° von der Zustellrichtung abweicht. Vorzugsweise liegen die Messpunkte mit Position i entlang des Durchmessers der Scheibe und zwar entgegen der Zustellrichtung, so dass jedem Messpunkt eine bestimmte Schnitttiefe zugeordnet ist. Die Dichte der Messpunkte beträgt vorzugsweise nicht weniger als 1 pro cm, und der Abstand eines Messpunkts zum nächsten Nachbarn ist für alle Messpunkte vorzugsweise derselbe.

Das Formprofil einer Scheibe ist die Linie, die die Messwerte si verbindet, die an den Positionen i gemäß der Vorschrift si = D - (FDi - BDi) berechnet werden, wobei D der Abstand zwischen den Sensoren, FDi der Abstand des oberen Sensors zum jeweiligen Messpunkt auf der Vorderseite der Scheibe und BDi der Abstand des unteren Sensors zum jeweiligen Messpunkt auf der Rückseite der Scheibe sind. Es sei darauf hingewiesen, dass die vorliegende Erfindung auch unter Zurückgreifen auf eine alternative Definition des Formprofils ausgeführt werden kann, solange diese alternative Definition die Form der Scheibe in Abhängigkeit der Schnitttiefe codiert.

Ein Durchschnittsformprofil von Scheiben ist ein durch Mittelwertbildung der Formprofile mehrerer Scheiben erhaltenes Formprofil. Ein Referenzformprofil ist ein angestrebtes Formprofil, vorzugsweise das Formprofil einer Scheibe, die vollkommen ebene und parallel zueinander liegende Hauptflächen aufweist. Das Durchschnittsformprofil wird von Scheiben ermittelt, die von vorzugsweise mindestens 1 bis 5 Abtrennvorgängen mittels derselben Drahtsäge resultieren, wobei diese Abtrennvorgänge dem mittels dieser Drahtsäge auszuführenden Abtrennvorgang unmittelbar vorausgegangen sind. Die Auswahl der Scheiben für das Erstellen des Durchschnittsformprofils kann scheibenbezogen oder schnittbezogen sein oder beides umfassen. Bei einer scheibenbezogenen Auswahl werden bestimmte Scheiben eines Abtrennvorgangs zur Bestimmung des jeweiligen Durchschnittsformprofils durch Mittelwertbildung herangezogen und andere ausgeschlossen. Beispielsweise werden nur solche Scheiben bei der Mittelwertbildung berücksichtigt, die eine bestimmte Lage im Werkstück haben, etwa nur jede 15te bis 25te Scheibe entlang der Werkstückachse. Eine weitere Möglichkeit der scheibenbezogenen Auswahl ist der Ausschluss von Scheiben mit der größten und der geringsten Abweichung des Formprofils vom Durchschnittsformprofil aller Scheiben des Abtrennvorgangs (sogenanntes gestutztes Mittel). Alternativ können auch Scheiben von der Mittelwertbildung ausgeschlossen werden, deren Formprofil vom Durchschnittsformprofil aller Scheiben des Abtrennvorgangs um mehr als 1 bis 2 Sigma abweicht. Bei einer schnittbezogenen Auswahl werden sämtliche Scheiben von mindestens einem Abtrennvorgang zur Bestimmung eines Durchschnittformprofils herangezogen und sämtliche Scheiben von mindestens einem anderen Abtrennvorgang davon ausgeschlossen.

Das Durchschnittsformprofil von Scheiben eines Abtrennvorgangs verändert sich im Verlauf einer Abfolge von Abtrennvorgängen. Veränderungen werden vorzugsweise herangezogen, um das Leistungsverhalten der Drahtsäge zu beurteilen. Sie können auf einen Verschleiß des Sägedrahts und/oder des Belags der Drahtführungsrollen oder eines anderen, einem Verschleiß unterworfenen Bauteils der Drahtsäge hinweisen. Vorzugsweise wird deshalb eine Schwelle für die Formabweichung definiert, beim Erreichen oder Überschreiten derer an Stelle eines weiteren Abtrennvorgangs Wartungsmaßnahmen (predictive maintenance activities) eingeleitet werden. Auch vor dem Erreichen einer solchen Schwelle können solche Veränderungen zum Anlass genommen werden, Anpassungsmaßnahmen zu treffen, die einer verschleißbedingten Verschlechterung des Arbeitsergebnisses entgegenwirken. Solche Anpassungsmaßnahmen können beispielsweise die Änderung der Zusammensetzung und/oder der Temperatur der Arbeitsflüssigkeit und/oder die Änderung der Drahtgeschwindigkeit und/oder anderer prozessspezifischer Parameter sein.

Eine Besonderheit stellen Abtrennvorgänge dar, die nach einer Änderung des Sägesystems stattfinden. Eine solche Änderung des Sägesystems liegt beispielsweise vor, wenn ein Wechsel von Drahtführungsrollen, mechanische Justierungen an der Drahtsäge oder Änderungen an physikalischen oder chemischen Eigenschaften der Arbeitsflüssigkeit vorgenommen wurden. Die ersten Abtrennvorgänge nach einer Änderung des Sägesystems, die sogenannten Initialschnitte, bestehen vorzugsweise aus 1 bis 5 Abtrennvorgängen. Für Initialschnitte wird die Formabweichung vorzugsweise durch Vergleich eines Durchschnittsformprofils von Scheiben mit dem Referenzformprofil bestimmt, wobei das Durchschnittsformprofil von Scheiben herangezogen wird, die mittels derselben Drahtsäge im Verlauf eines oder mehrerer Initialschnitte erzeugt wurden, die vor der Änderung des Sägesystems durchgeführt wurden.

Eine erfindungsgemäß verwendete Drahtsäge umfasst zwei oder mehrere Drahtführungsrollen, beispielsweise drei oder vier Drahtführungsrollen. Das Temperieren der Festlager der Drahtführungsrollen kann beschränkt sein auf die zwei Drahtführungsrollen, zwischen denen das Drahtgatter gespannt ist, durch das das Werkstück zugestellt wird.

Das Werkstück besteht vorzugsweise aus einem Halbleitermaterial wie Silizium, das in multikristallinem oder einkristallinem Zustand vorliegt. Der Umfang des Querschnitts des Werkstücks ist quadratisch, rechteckig oder kreisförmig. Im Fall eines Werkstücks mit zylindrischer Form erstreckt sich die Werkstückachse durch die Mitte des Zylinders. Das erfindungsgemäße Verfahren eignet sich insbesondere zur Herstellung von runden Halbleiterscheiben aus einkristallinem Silizium mit einem Durchmesser von mindestens 200 mm, insbesondere mindestens 300 mm.

Einzelheiten der Erfindung werden nachfolgend unter Bezugnahme auf Zeichnungen beschrieben.

### Kurzbeschreibung der Figuren

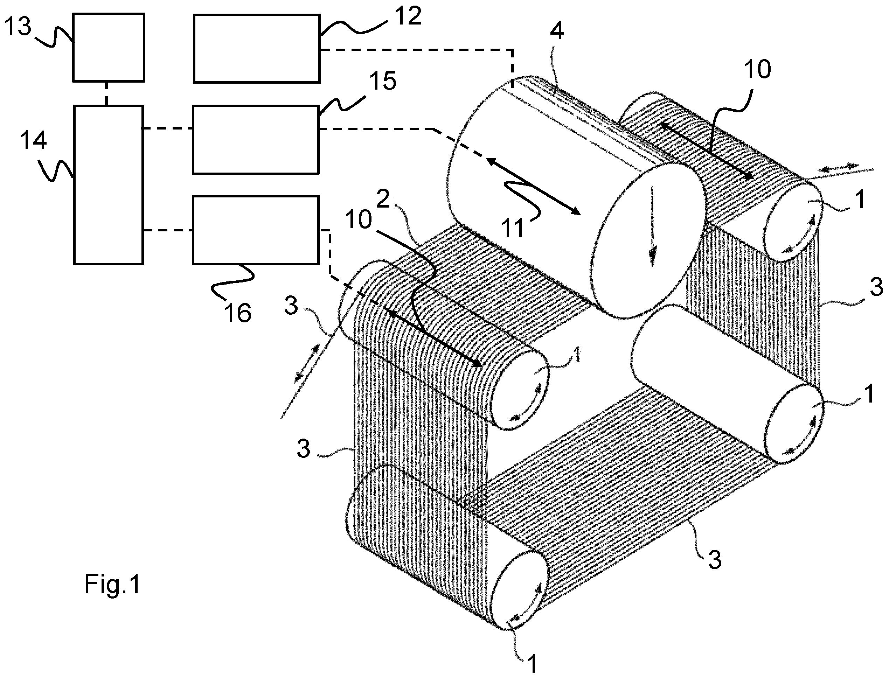

**Fig. 1** zeigt schematisch Merkmale einer Drahtsäge, die bei der Anwendung der Erfindung eine Rolle spielen.
**Fig. 2** zeigt weitere Einzelheiten der Drahtsäge.
**Fig. 3** zeigt den Verlauf eines Schnittspalts durch das Werkstück und einen vorgesehenen Verlauf, der durch eine Referenztrajektorie repräsentiert wird.
**Fig. 4** zeigt die Anordnung einer Scheibe zwischen zwei Sensoren zum Ermitteln von deren Formabweichung vor einem Abtrennvorgang.
**Fig. 5** zeigt den Vorteil, der sich dadurch ergibt, dass die Amplituden von WGTC und IPC addieren.
**Fig. 6** zeigt den Bereich, innerhalb dessen eine Amplitude 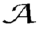 der Verschiebung linear abhängig von der die Verschiebung bewirkenden Größe ist.
**Fig. 7** zeigt eine vorteilhafte Aufteilung des Gesamtkorrekturprofils auf WGTC und IPC.
**Fig. 8** zeigt, dass mittels der Kombination von WGTC und IPC ein größerer Verschiebeweg je Zeiteinheit bewirkt werden kann.
**Fig.9** zeigt, wie eine vorteilhafte Aufteilung des Gesamtkorrekturprofils auf WGTC und IPC ein Überschwingen der Amplitude dämpft, das bei Anwendung von WGTC als einziger Maßnahme zu beobachten wäre.

### Liste der verwendeten Bezugszeichen

- **1**: Drahtführungsrolle
- **2**: Drahtgatter
- **3**: Sägedraht
- **4**: Werkstück
- **5**: Festlager
- **6**: Loslager
- **7**: Maschinenrahmen
- **8**: Belag
- **9**: Kanal
- **10**: Richtungspfeil
- **11**: Richtungspfeil
- **12**: Stellvorrichtung
- **13**: Schnittspaltdetektor
- **14**: Datenverarbeitungseinheit
- **15**: Stellelement
- **16**: Steuerungseinheit
- **17**: Schnittspalt
- **18**: Referenztrajektorie
- **19**: oberer Sensor
- **20**: unterer Sensor
- **21**: Scheibe

### Detaillierte Beschreibung erfindungsgemäßer Ausführungsbeispiele

Eine zur Durchführung des erfindungsgemäßen Verfahrens geeignete Drahtsäge umfasst ein Drahtgatter 2 aus sich bewegenden Drahtabschnitten eines Sägedrahts 3, das in einer Ebene zwischen zwei Drahtführungsrollen 1 gespannt ist. Während eines Abtrennvorgangs wird das Werkstück 4 mittels einer Stellvorrichtung 12 durch das Drahtgatter 2 entlang einer Zustellrichtung senkrecht zu einer Werkstückachse und senkrecht zur Ebene des Drahtgatters 2 zugestellt. Im Zuge dessen werden in Abhängigkeit eines ersten und eines zweiten Korrekturprofils die das Drahtgatter 2 spannenden Drahtführungsrollen 1 und das Werkstück 4 in jeweils axialer Richtung entsprechend den Richtungspfeilen 10 beziehungsweise 11 verschoben. Das erste und das zweite Korrekturprofil sind einer Formabweichung entgegengerichtet, die vor oder während eines Abtrennvorgangs ermittelt wird. Zum Ermitteln der Formabweichung während des Abtrennvorgangs steht ein Schnittspaltdetektor 13 zum Beobachten von Schnittspalten und eine Datenverarbeitungseinheit 14 zum Erstellen des ersten und des zweiten Korrekturprofils zur Verfügung. Die Datenverarbeitungseinheit 14 übermittelt einem Stellelement 15 ein Steuersignal, das in Abhängigkeit der Schnitttiefe eine Verschiebung des Werkstücks 4 entsprechend des zweiten Korrekturprofils in die Richtung entlang der Werkstückachse bewirkt, die mit dem Richtungspfeil 11 gekennzeichnet ist.

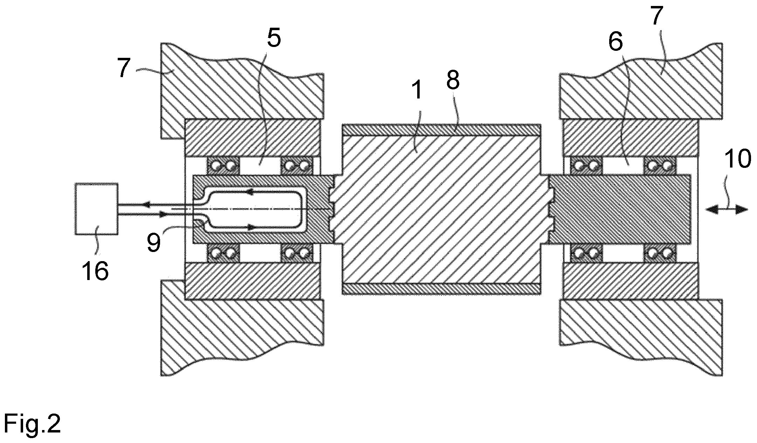

Wie in Fig. 2 gezeigt, ist die Drahtführungsrolle 1 zwischen einem Festlager 5 und einem Loslager 6 gelagert. Festlager 5 und Loslager 6 sind auf einem Maschinenrahmen 7 abgestützt. Die Drahtführungsrolle 1 trägt einen Belag 8, der mit Rillen versehen ist, in denen der Sägedraht 3 läuft. Das Festlager 5 umfasst einen Kanal 9, durch den eine Kühlflüssigkeit zum Temperieren des Festlagers 5 geleitet wird. Wird die Temperatur der Flüssigkeit erhöht, bewirkt die Wärmeausdehnung des Festlagers 5 eine axiale Verschiebung der Drahtführungsrolle 1 in Richtung des Loslagers 6, und das Loslager 6 bewegt sich in die mit dem Richtungspfeil 10 gekennzeichnete Richtung der Achse der Drahtführungsrolle 1 gegenüber dem Maschinenrahmen 7 nach außen. Wird die Temperatur der Kühlflüssigkeit verringert, wird eine Verschiebung der Drahtführungsrolle 1 und des Loslagers 6 in die entgegengesetzte Richtung bewirkt. Die Temperatur der Kühlflüssigkeit wird in Abhängigkeit der Schnitttiefe durch ein Temperaturprofil vorgegeben, das mit dem ersten Korrekturprofil korreliert. Eine Steuerungseinheit 16, die in Verbindung mit einem Wärmeaustauscher und einer Pumpe steht, sorgt dafür, dass die durch das Festlager 5 geleitete Flüssigkeit beim Erreichen einer bestimmten Schnitttiefe die vom jeweiligen Temperaturprofil verlangte Temperatur hat. Die Datenverarbeitungseinheit 14 übermittelt der Steuerungseinheit 16 das Temperaturprofil, das eine Verschiebung der Loslager entsprechend des ersten Korrekturprofils bewirkt.

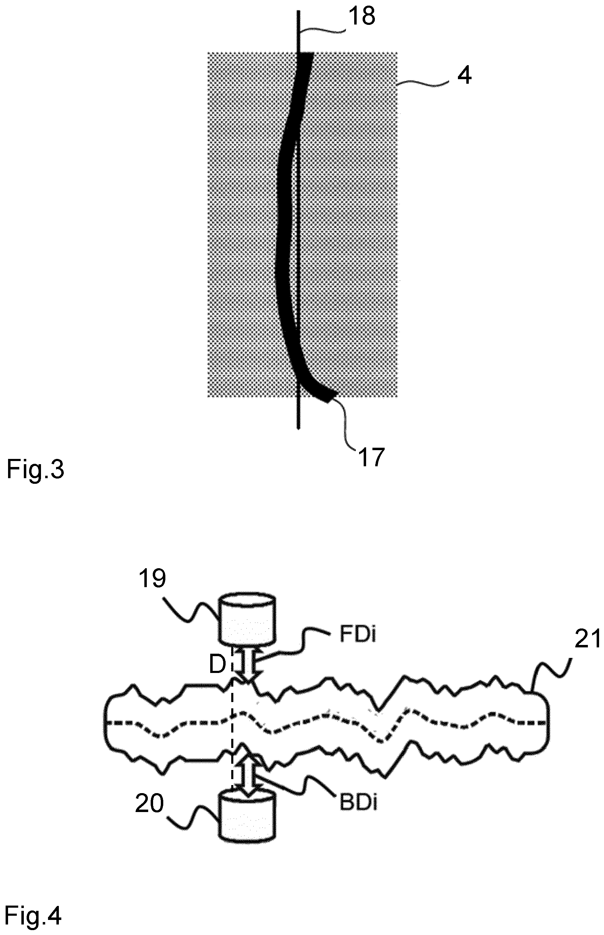

Fig. 3 zeigt den Verlauf eines Schnittspalts 17 durch das Werkstück 4 und einen vorgesehenen Verlauf, der durch eine Referenztrajektorie 18 repräsentiert wird. Die jeweilige Abweichung der Linie durch die Mitte des Schnittspalts von der Referenztrajektorie entspricht dem Gesamtkorrekturprofil, das in Form des ersten und des zweiten Korrekturprofils zwischen WGTC und IPC aufgeteilt wird.

Fig. 4 zeigt die Anordnung einer Scheibe zwischen zwei Sensoren 19, 20 zum Ermitteln einer Formabweichung vor einem Abtrennvorgang. Die Sensoren 19, 20 messen in Zustellrichtung entlang des Durchmessers der Scheibe 21 an bestimmten Positionen i entsprechend bestimmter Schnitttiefen den Abstand FDi des oberen Sensors 19 zur Vorderseite der Scheibe 21 und den Abstand BDi des unteren Sensors 20 zur Rückseite der Scheibe 21. Das Formprofil der Scheibe ist die Linie, die die Messwerte si verbindet, die gemäß der Vorschrift si = D - (FDi - BDi) berechnet werden, wobei D den Abstand zwischen den Sensoren bezeichnet. Die Formabweichung der Scheibe ergibt sich durch Vergleich des Formprofils der Scheibe mit einem Referenzformprofil. Die Abweichung zum Referenzformprofil in Abhängigkeit der Schnitttiefe entspricht dem Gesamtkorrekturprofil, das in Form des ersten und des zweiten Korrekturprofils zwischen WGTC und IPC aufgeteilt wird.

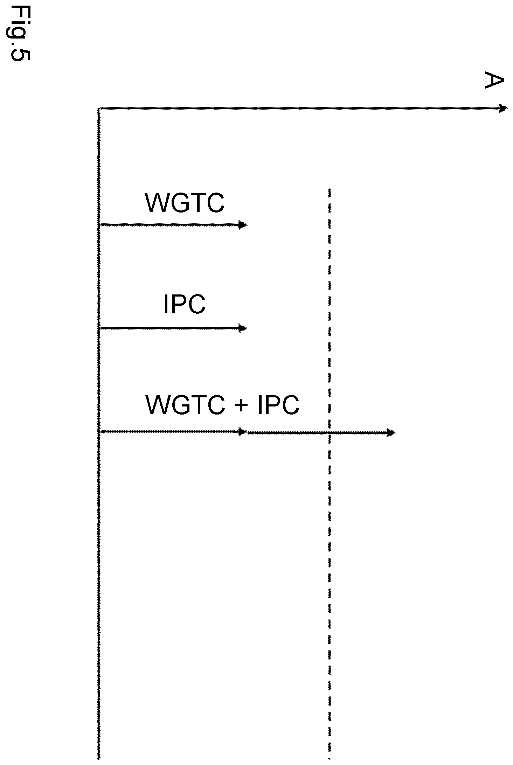

Fig. 5 zeigt den Vorteil, der sich dadurch ergibt, dass die Amplituden von WGTC und IPC addieren. Erfordert das Gesamtkorrekturprofil einen Verschiebeweg mit der Amplitude A in der Größenordnung der gestrichelt gezeichneten Linie, könnte dieser Verschiebeweg mittels WGTC oder IPC für sich genommen nicht bewältigt werden, da der erreichbare Verschiebeweg der jeweiligen Einzelmaßnahme nicht ausreicht. Erst die Kombination von WGTC und IPC mach das möglich.

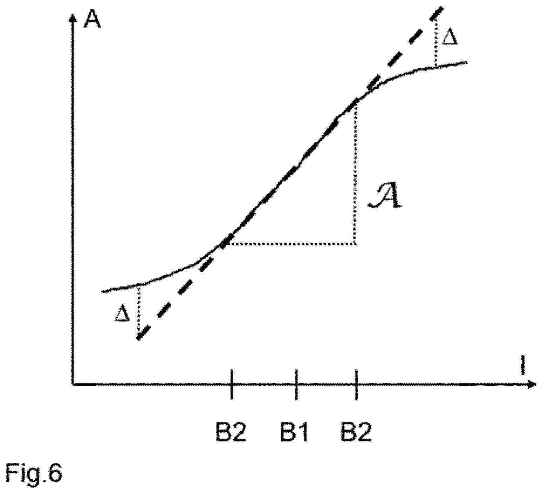

Fig. 6 zeigt, dass im Bereich B2 mit der Ruhelage B1 die Amplitude 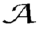 der Verschiebung linear abhängig von der die Verschiebung bewirkenden Größe (Input, I) ist. Außerhalb dieses Bereichs kommt es zu Abweichungen vom linearen Verhalten, die Fehler Δ zur Folge haben. Mittels Kombinieren von WGTC und IPC wird der Bereich B2 vergrößert, in dem das Gesamtsystem linear reagiert.

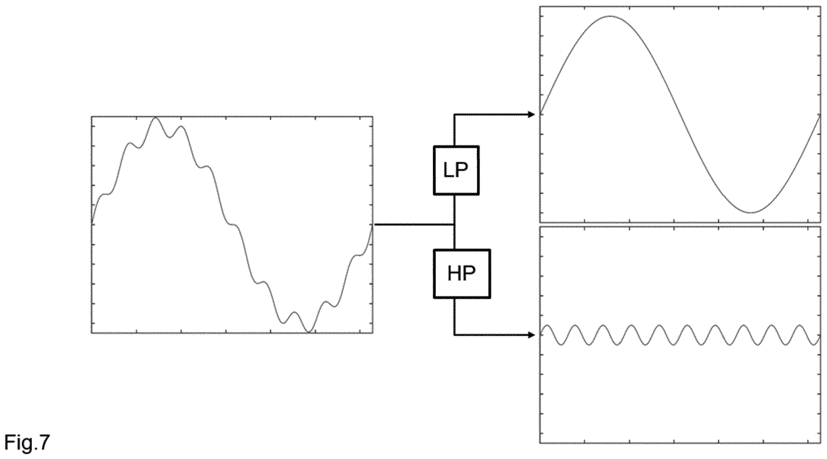

Fig. 7 zeigt eine vorteilhafte Aufteilung des Gesamtkorrekturprofils auf WGTC und IPC, die darin besteht, dass mittels WGTC und dem ersten Korrekturprofil niederfrequente Formabweichungen und mittels IPC und dem zweiten Korrekturprofil hochfrequenten Formabweichungen entgegengewirkt wird. Zu diesem Zweck wird vorzugsweise eine Frequenzweiche eingesetzt, die mittels eines Tiefpass-Filters (LP) und eines Hochpass-Filters (HP) niederfrequente Anteile der Formabweichung einer Korrektur mittels WGTC und hochfrequente Anteile der Formabweichung einer Korrektur mittels IPC zuweist.

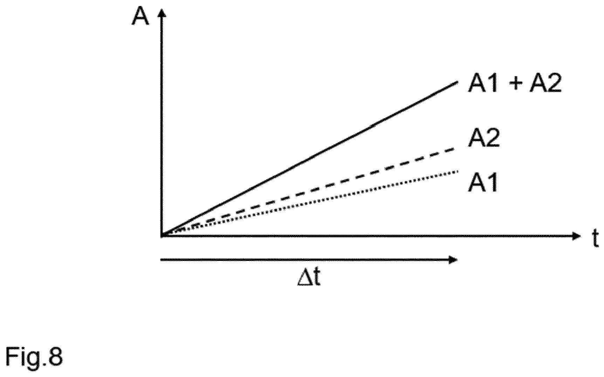

Fig. 8 zeigt, dass mittels der Kombination von WGTC und IPC eine größere Gesamtamplitude A2+A1 je Zeiteinheit Δt bewirkt werden kann, weil das Verschieben der Loslager und des Werkstücks von zwei unabhängigen Stellgliedern ausgeführt wird. Bei Anwendung von WGTC oder IPC alleine ist in dieser Zeiteinheit nur jeweils eine Amplitude von A1 beziehungsweise A2 möglich.

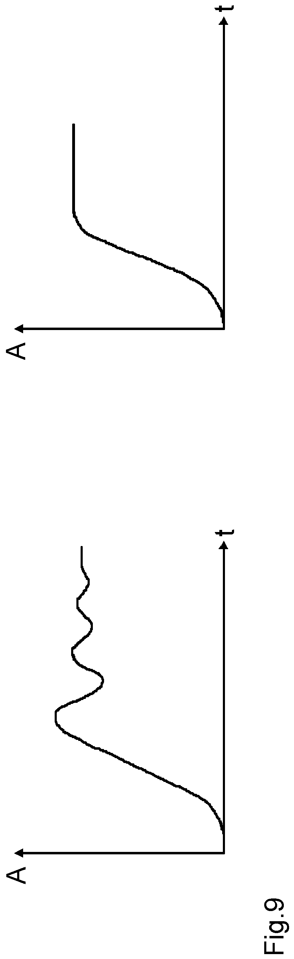

Fig.9 zeigt, wie eine vorteilhafte Aufteilung des Gesamtkorrekturprofils auf WGTC und IPC ein Überschwingen der Amplitude A im Verlauf der Zeit t dämpft (rechte Abbildung), das bei Anwendung von WGTC als einziger Maßnahme zu beobachten wäre (linke Abbildung).

Die vorstehende Beschreibung beispielhafter Ausführungsformen ist exemplarisch zu verstehen. Die damit erfolgte Offenbarung ermöglicht es dem Fachmann einerseits, die vorliegende Erfindung und die damit verbundenen Vorteile zu verstehen, und umfasst andererseits im Verständnis des Fachmanns auch offensichtliche Abänderungen und Modifikationen der beschriebenen Strukturen und Verfahren.

## Patentansprüche

1. Verfahren zum Abtrennen einer Vielzahl von Scheiben mittels einer Drahtsäge von Werkstücken während einer Abfolge von Abtrennvorgängen, die in Initialschnitte und Folgeschnitte untergliedert sind, wobei die Drahtsäge ein Drahtgatter aus sich bewegenden Drahtabschnitten eines Sägedrahts und eine Stellvorrichtung umfasst, und das Drahtgatter in einer Ebene zwischen zwei Drahtführungsrollen gespannt ist, wobei jede der zwei Drahtführungsrollen zwischen einem Festlager und einem Loslager gelagert ist, das Verfahren umfassend
während eines jeden der Abtrennvorgänge das Zustellen des jeweiligen Werkstücks mittels der Stellvorrichtung durch das Drahtgatter entlang einer Zustellrichtung senkrecht zu einer Werkstückachse und senkrecht zur Ebene des Drahtgatters in Gegenwart einer Arbeitsflüssigkeit und von Hartstoffen, die abrasiv auf das Werkstück einwirken, **gekennzeichnet durch**
während eines jeden der Abtrennvorgänge das Zustellen des Werkstücks durch das Drahtgatter unter gleichzeitigem axialen Verschieben der Loslager durch Temperieren der Festlager mit einer Kühlflüssigkeit gemäß der Vorgabe eines Temperaturprofils, das die Temperatur der Kühlflüssigkeit in Abhängigkeit einer Schnitttiefe vorgibt und mit einem ersten Korrekturprofil korreliert, welches den Verschiebeweg der Loslager in Abhängigkeit der Schnitttiefe vorgibt; und
das Zustellen des Werkstücks durch das Drahtgatter unter gleichzeitigem Verschieben des Werkstücks entlang der Werkstückachse mittels eines Stellelements gemäß der Vorgabe eines zweiten Korrekturprofils, welches den Verschiebeweg des Werkstücks vorgibt, wobei das erste und zweite Korrekturprofil einer Formabweichung entgegengerichtet sind; und
das Ermitteln der Formabweichung während eines jeden der Abtrennvorgänge und/oder vor jedem der Abtrennvorgänge.

2. Verfahren nach Anspruch 1, **dadurch gekennzeichnet, dass** die Formabweichung während eines jeden der Abtrennvorgänge gemessen wird, indem die Lage einer Linie durch die Mitte von mindestens einem Schnittspalt mit der Lage einer Referenztrajektorie verglichen wird.

3. Verfahren nach Anspruch 1, **dadurch gekennzeichnet, dass** die Formabweichung durch einen Vergleich eines Durchschnittsformprofils bereits abgetrennter Scheiben mit einem Referenzformprofil vor jedem der Abtrennvorgänge ermittelt wird.

4. Verfahren nach Anspruch 3, **dadurch gekennzeichnet, dass** das Durchschnittsformprofil durch Mittelwertbildung von Formprofilen ausgewählter Scheiben bestimmt wird, wobei die Auswahl scheibenbezogen, schnittbezogen, oder scheibenbezogen und schnittbezogen getroffen wird.

5. Verfahren nach Anspruch 3 oder Anspruch 4, **dadurch gekennzeichnet, dass** die bereits abgetrennten Scheiben von mindestens 1 bis 5 Abtrennvorgängen stammen, die dem jeweiligen Abtrennvorgang unmittelbar vorausgegangen sind.

6. Verfahren nach einem der Ansprüche 1 bis 5, **dadurch gekennzeichnet, dass** an Stelle des jeweiligen Abtrennvorgangs eine Wartungsmaßnahme eingeleitet wird, falls die vor dem jeweiligen Abtrennvorgang ermittelte Formabweichung eine definierte Schwelle erreicht oder überschreitet.
